# EUROPEAN PATENT APPLICATION

(11) **EP 1 253 358 A2**
(43) Date of publication of application: **30.10.2002**
(21) Application number: 02003035.9
(22) Date of filing: 12.02.2002
(51) Int. Cl.: F16J 15/34

(54) **Self-aligning driving device for a mechanical seal**

(30) Priority: 23.04.2001 IT MI010854
(71) Applicant: ROTEN S.r.l., 20123 Milan (IT)
(72) Inventor: Vidoni, Augusto, 20134 Milano (IT)
(74) Representative: Lecce, Giovanni

(57) **Abstract**

A device (10) for the entrainment-sealing of fluids for rotary shafts, applied to shaft (12) of a pump to connect said shaft to the static part (14) of a machine or system comprises an internal sleeve (18) fixed to said shaft, and an external reinforcement or sleeve (22) fitted on the internal sleeve (18); said internal sleeve and reinforcement being connected to one another my means of two or more balls (24).

## Description

The present invention relates to a device for the entrainment-sealing of fluids for rotary shafts, with automatic recovery of misalignments.

More particularly, the present invention relates to a device for the entrainment-sealing of fluids for rotary shafts suitable to automatically compensate the misalignments or maladjustments that take place between the rotary shafts and the static part either on the assembly or, as a consequence, during the operation. Such misalignments, that take place often also in the transversal direction, cause rotations anomalous in that they develop along eccentric and longitudinal paths.

As is known, some industrial systems are provided with pumps with a mechanical seal on the rotary shafts wherein the transmission of motion realizes in the same sealing device, for instance through electric means that keep the respective connection surfaces in touch with each other.

Pumps of this type are found, for instance, in plants for the production or treatment of foodstuff, in dyeing plants and paper mills.

The conventional devices for mechanical sealing of this type, applied to the pumps shafts, have remarkable drawbacks, connected to the fact that during the installation or assembly, misalignments take place between the rotary shaft and the fixed part. Sometimes, the misalignment is due to maladjustments or lack of co-axiality, but some times the misalignment takes place also in the transversal direction, when an angle between the rotary shaft and the fixed part is caused by the connection. This transversal misalignment causes an eccentric rotation instead of an orthogonal one which cannot be compensated and can cause in the time malfunctions involving the necessity of maintenance or repair interventions.

In the attempt at overcoming the problem, it has been proposed to utilize gaskets of the packing type which however are subject to a quick wear and involve therefore frequent restoring operations. Besides, the use of a packing between the rotary shaft and the static part allows to compensate only axial misalignments, but not also the transversal ones, and is therefore only partly effective.

Another drawback that is found in the known mechanical sealing devices concerns their being stiffly connected to the rotary shaft and the static part, and cannot therefore adapt and compensate dimensionally the effects due to the expansion caused by heat. In the plants where they are applied, such extensions are generally quite marked, as the temperatures can reach very high levels. Also for this reason, the known sealing devices are subject to high stresses that limit their duration in the time.

Object of the present invention is to obviate the aforementioned drawbacks.

More particularly, object of this invention is to provide a device for the entrainment-sealing of fluids for rotary shafts such as to allow the automatic and immediate recovery of axial and/or transversal misalignments that take place following the assembly, i.e. once the connection between the rotary shaft and the fixed or static part of the system has taken place.

A further object of the present invention is to provide a device for the entrainment-sealing of fluids able to adapt automatically to the size variations due to the extensions caused by heat, preventing strains and stresses that jeopardize the correct working.

A further object of the invention is to provide a device for the entrainment-sealing of fluids such as not involve the use of additional components such packing gaskets and the like that must be replaced frequently being subject to a rapid wear.

Still another object of the invention is to provide users with a device for the entrainment-sealing such as to ensure a high level of resistance and reliability in the time, and also such as to be realized easily and economically.

According to the present invention, these and still other objects that will be apparent thanks to the following description are achieved by means of a device for the entrainment-sealing of fluids for rotary shafts, applied to the shaft of a pump to realize the sealing between said shaft and the static part of a machine or system, comprising an internal sleeve fixed to said shaft and an external reinforcement or sleeve fitted on the internal sleeve, wherein said internal sleeve and reinforcement are connected to each other by means of two or more balls located in as many seats obtained therein.

The constructive and functional characteristics of the device for the entrainment-sealing for rotary shafts of the present invention will be better understood thanks to the following description wherein reference is made to the attached drawings that represent a preferred non limiting embodiment, and wherein:
Figure 1 shows the schematic view of a longitudinal section of the device for the entrainment-sealing of fluids of the present invention in operating position, i.e. such as to realize the connection and sealing between a rotary shaft and the static part of a machine or system;
Figure 2 shows the schematic view of a cross-section along the A - A line of Figure 1 of the same device;
Figure 3 shows the enlarged schematic view of the device of Figure 1, to stress the possible maladjustments between a rotary shaft and the fixed part of the machine.

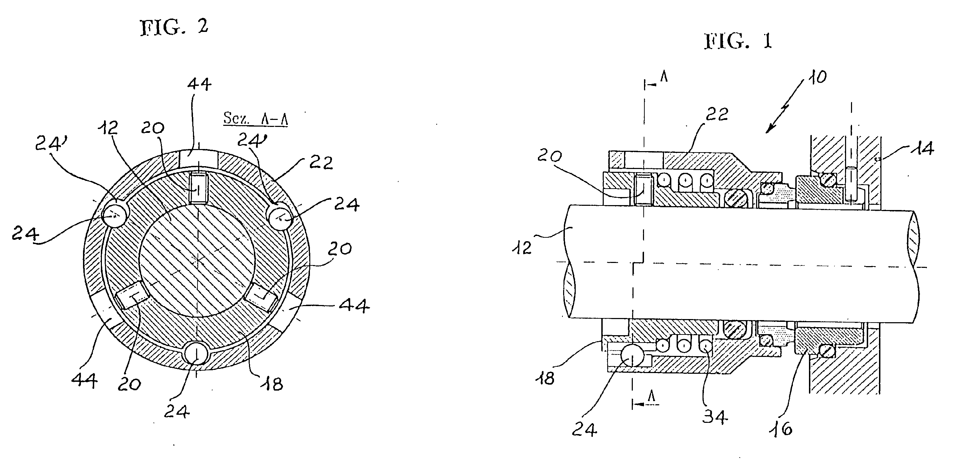

With reference to the aforesaid figures, the device for the entrainment-sealing for rotary shafts of the present invention, indicated as a whole by 10 in Figure 1, is applied to the rotary shaft 12 of a conventional pump for the realization of a seal between said shaft and the static part 14 of a machine or system. The rotary shaft 12 is engaged in the static part 14 through a special opening, circumscribed by a fixed sealing ring 16, known *per se*. The device for the entrainment-sealing 10 comprises: an internal sleeve 18, fitted on the rotary shaft 12, to which it is fixed by means of one or more dowels 20 radially arranged in said sleeve, and an external reinforcement or sleeve 22, connected to the internal sleeve 18 through connecting means 24, which will be expounded later on. The external lateral surface of the internal sleeve 18 has, in the central-front part facing said static part 14, an annular lowering 26 that forms a shoulder 28. In parallel, the internal lateral surface of the external reinforcement or sleeve 22 has in the central-rear part oriented in an opposite direction with respect to the static part 14, an annular lowering 30 that forms a shoulder 32. The annular lowerings 26, 30, together with the respective shoulders 28, 32 form a space 36 wherein a helical spring 34 is located. Shoulders 28 and 32 are orthogonal with respect to the longitudinal axis of shaft 12 and opposite to one another, and the ends of the helical spring 34 abut against the same.

In particular, said spring 34 is fitted on the lowered part 26 of the internal sleeve 18. The helical spring 34 is intended for keeping constantly in touch the two sealing faces of the device for the entrainment-sealing of fluids 10. In particular, said spring 34 pushes the external reinforcement or sleeve 22, which in its turn pushes a ring 16' from anti-wear material against the fixed sealing 16.

The latter is thus systematically in touch with the static part 14, according to its sealing function.

In fact, said ring 16' from anti-wear material that forms the sealing plane is preferably inserted between the external reinforcement or sleeve 22 and the fixed sealing ring 16.

However, ring 16' from anti-wear material may be integrated in the external reinforcement or sleeve 22 by welding or like fastening systems, or it may be integral with said reinforcement. Sealing gaskets 38, 40 and 42, for instance of the O ring type, are advantageously located between the internal sleeve 18 and the external reinforcement or sleeve 22, between the latter and ring 16' from anti-wear material, as well as between the fixed ring 16 and the static part 14 of the machine or system.

The connection means are constituted by balls 24, preferably made of metal, abutting in seats 24' partly formed along the external surface of the internal sleeve 18 and partly along the internal surface of the external reinforcement or sleeve 22.

In the preferred embodiment shown in the figures, balls 24 and the related seats 24' are in number of three, arranged at 120° in the device for the entrainment-sealing of fluids 10.

Said seats 24' are constituted by recesses having a substantially semi-circular profile, whose length is markedly higher than the diameter of balls 24.

Also the width in the transversal direction of seats 24' is greater than the diameter of balls 24, which can therefore move therein in any direction. In correspondence of dowel 20 there are obtained, on the external reinforcement or sleeve 22, access through-openings 44 for screwing and unscrewing said dowels, which maintain their position and keep device 10 assembled until the same is applied to shaft 12 and connected to the static part 14 of the machine or system.

The presence of balls 24, abutted in seats 24' obtained between the internal sleeve 18 and the external reinforcement or sleeve 22, allows to compensate in an effective, automatic and complete manner also in the transversal direction the misalignments and maladjustments that take place following the assembly, during the working of the device 10.

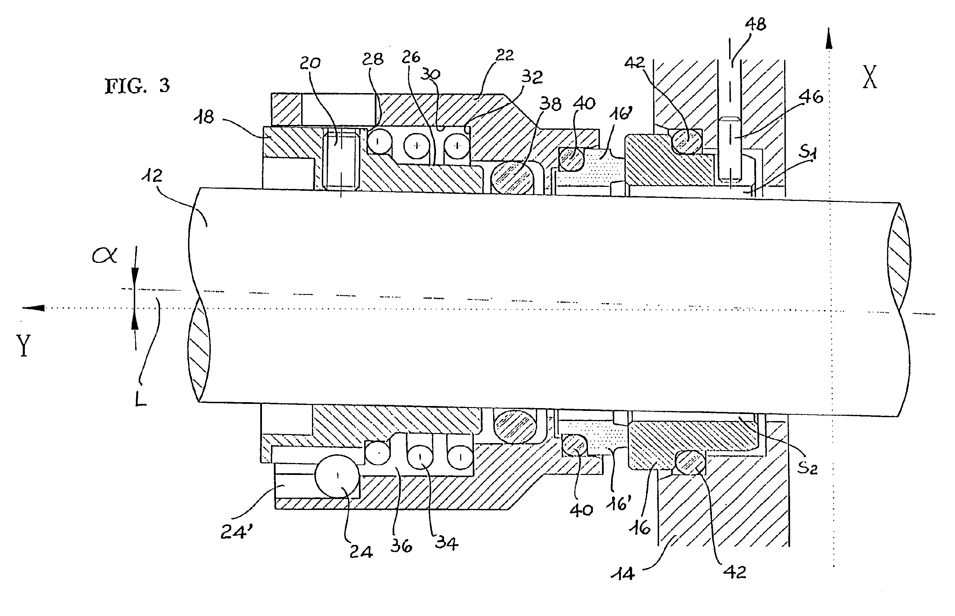

Figure 3 shows, by way of example, such misalignments, and symbol "L" indicates the amount of deviation with respect to the horizontal "X" and vertical "Y" axes of shaft 12; the deviation is stressed by S1 and S2 with regard to the entry zone of said shaft in the fixed sealing ring 16. The latter is locked in its position by means of a conventional pin 46 inserted starting from a hole 48 obtained in the static part 14.

Balls 24, besides performing the aforementioned compensation functions, constitute also the gears for the rotary entrainment-sealing of the external reinforcement or sleeve 22, and replace the pins, dowels or the traditional means used for this purpose. In this aspect, balls 24 provide clearly higher safety guarantees with respect to the aforesaid systems which are subject to the risk of breaking during the start, i.e. at the time when the rotation of shaft 12 is activated.

As can be inferred from the above description, the advantages achieved by the invention are evident.

The device for the entrainment-sealing of fluids 10 of the present invention allows to compensate automatically and continuously also the transversal misalignments and maladjustments that create following its assembly, thanks to the presence of balls 24 that are able to move continuously in any directions in the respective seats 24'. As a consequence, the misalignments and maladjustments do not create strains that can cause malfunctions with the necessity of repair operations. The utilization of balls 24 is additionally advantageous for the purpose of the entrainment of the external reinforcement or sleeve 22, as said balls are not subject to the breaking risk as happens in case of use of pins, dowels and the like.

While the present invention has been described above with reference to an embodiment reported by way of non limiting example, it is evident that many modifications and variants will be apparent to those skilled in the art, in the light of the above description. Therefore, the present invention intends to comprise all the modifications and variants that fall within the spirit and the protection scope of the following claims.

## Claims

1. A device (10) for the entrainment-sealing of fluids for rotary shafts, applied to shaft (12) of a pump to realize the sealing between said shaft to the static part (14) of a machine or system, **characterized in that** it comprises an internal sleeve (18) fixed to said shaft, and an external reinforcement or sleeve (22) fitted on the internal sleeve (18); said internal shaft (18) and reinforcement (22) being connected to one another by means of two or more balls (24), located in as many seats (24') formed therein.

2. The device according to claim 1, **characterized in that** each of seats (24') is obtained partly along the external lateral surface of sleeve (18) and partly along the external lateral surface of reinforcement (22).

3. The device according to claims 1 or 2, **characterized in that** seats (24') for balls (24) are in number of three, arranged at 120° along sleeve (18) and reinforcement (22).

4. The device according to any of the preceding claims, **characterized in that** seats (24') have a substantially semicircular profile, with a greater diameter with respect to the diameter of balls (24), and a longitudinal extension greater than the diameter of balls (24).

5. The device according to any of the preceding claims, **characterized in that** the external lateral surface of sleeve (18) is provided, in the central-front zone facing said static part (14) of the machine, with an annular lowering (26) that forms a shoulder (28); and **in that** the internal lateral surface of reinforcement (22) in the central-rear zone opposite to the static part (14) is provided with an annular lowering (30) that forms a shoulder (32); said annular lowerings (26, 30) with the related shoulders (28, 32) forming a space (36) wherein a helical spring (34) is located.

6. The device according to claim 5, **characterized in that** said shoulders (28, 32) are opposite to one another, orthogonal with respect to the longitudinal axis of shaft (12), and **in that** the ends of spring (34), fitted on the lowered zone (26) of the internal sleeve (18), abut on the same.

7. The device according to any of the preceding claims, **characterized in that** the static part (14) of the machine or system is provided with a fixed sealing ring (16) and the spring (34) pushes reinforcement (22) against the fixed sealing ring (16).

8. The device according to any of the preceding claims, **characterized in that** the internal sleeve (18) is fastened to shaft (12) by means of one or more dowels (20).

9. The device according to claim 7, **characterized in that** reinforcement (22) strikes, with its front end facing the static part (14) a sealing ring (16') from anti-wear material, which in its turn strikes the fixed sealing ring (16).

10. The device according to claim 9, **characterized in that** the sealing ring (16') is realized integrally with reinforcement (22).
